(19) **Europäisches Patentamt / European Patent Office / Office européen des brevets**

(11) **EP 3 394 591 B1**

(12) # FASCICULE DE BREVET EUROPEEN

(45) Date de publication et mention de la délivrance du brevet:
**06.11.2019 Bulletin 2019/45**

(21) Numéro de dépôt: **16829278.7**

(22) Date de dépôt: **22.12.2016**

(51) Int Cl.:
**G01N 15/02** *(2006.01)*　　**G01N 15/14** *(2006.01)*
**G03H 1/04** *(2006.01)*　　**G03H 1/00** *(2006.01)*
**G01N 15/00** *(2006.01)*　　**G01N 15/10** *(2006.01)*

(86) Numéro de dépôt international:
**PCT/FR2016/053648**

(87) Numéro de publication internationale:
**WO 2017/109428 (29.06.2017 Gazette 2017/26)**

(54) **PROCÉDÉ D'OBSERVATION D'UN ÉCHANTILLON PAR IMAGERIE SANS LENTILLE**

BEOBACHTUNGSVERFAHREN EINER PROBE IN EINER LINSENLOSEN ABBILDUNG

OBSERVATION METHOD OF A SAMPLE BY IMAGING WITHOUT A LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2015 FR 1563320**

(43) Date de publication de la demande:
**31.10.2018 Bulletin 2018/44**

(73) Titulaire: **Commissariat à l'énergie atomique et aux énergies alternatives 75015 Paris (FR)**

(72) Inventeur: **BLANDIN, Pierre 38500 Coublevie (FR)**

(74) Mandataire: **GIE Innovation Competence Group 310, avenue Berthelot 69372 Lyon Cedex 08 (FR)**

(56) Documents cités:
**WO-A1-2015/011096　　CN-A- 101 471 332 US-A1- 2007 253 454**

**Description**

**DOMAINE TECHNIQUE**

Le domaine technique de l'invention est lié à l'observation d'un échantillon, en particulier un échantillon biologique, par imagerie sans lentille.

**ART ANTERIEUR**

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image d'une onde lumineuse transmise par l'échantillon.

Cette image est formée de figures d'interférence entre l'onde lumineuse émise par la source et transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ». L'image formée sur le capteur d'image peut être traitée par un algorithme de propagation numérique, de manière à estimer des propriétés optiques de l'échantillon. De tels algorithmes sont bien connus dans le domaine de la reconstruction holographique. Pour cela, la distance entre l'échantillon et le capteur d'image étant connue, on applique un algorithme de reconstruction holographique, prenant en compte cette distance.

La publication Garcia-Sucerquia J., « Digital in-line holographic microscopy », Applied Optics, Vol. 45, No. 5, 10 february 2006, décrit l'observation de particules, par exemple des particules biologiques, à l'aide d'un faisceau laser, ainsi que l'application d'algorithmes de reconstruction à des images formées sur un capteur CCD.

Le document WO2008090330 a montré qu'en remplaçant la source de lumière laser par une diode électroluminescente, filtrée spatialement, il était possible d'obtenir une image exploitable d'échantillons biologiques, en l'occurrence des cellules, par imagerie sans lentille. Le dispositif décrit dans ce document permet d'associer, à chaque cellule, une figure d'interférence dont la morphologie permet d'identifier le type de cellule. D'autres publications ont suivi, confirmant l'intérêt d'une telle technologie, par exemple la demande US2012/0218379.

L'imagerie sans lentille apparaît à présent comme une alternative simple et peu onéreuse à un microscope classique. De plus, son champ d'observation est nettement plus important que ne peut l'être celui d'un microscope. On comprend alors que les perspectives d'application liées à cette technologie soient.

La publication WO 2015/011096 A1 décrit un procédé d'observation d'un échantillon particulièrement intéressant.

Les inventeurs proposent un procédé d'observation d'un échantillon amélioré par rapport aux procédés décrits ci-avant, permettant d'obtenir des images dont le rapport signal à bruit est amélioré par rapport à l'art antérieur.

**EXPOSE DE L'INVENTION**

Un premier objet de l'invention est un procédé d'observation d'un échantillon, comportant les étapes suivantes :

a) illumination dudit échantillon à l'aide d'une diode laser, apte à émettre une onde lumineuse incidente, ladite diode laser étant alimentée par un courant d'alimentation, de telle sorte qu'un effet laser est obtenu lorsqu'une intensité dudit courant d'alimentation dépasse une intensité dite intensité seuil ;

b) acquisition, à l'aide d'un capteur d'image, d'une image de l'échantillon, l'échantillon étant disposé entre la diode laser et le capteur d'image, chaque image étant représentative d'une onde lumineuse transmise par l'échantillon sous l'effet de ladite illumination ;

le procédé étant caractérisé en ce que l'intensité du courant d'alimentation de ladite diode laser est inférieure ou égale à une intensité dite critique, ladite intensité critique étant déterminée, préalablement à l'étape a) selon les étapes préliminaires suivantes :

i) placement de ladite diode laser de telle sorte que l'onde lumineuse incidente qu'elle émet se propage jusqu'au capteur d'image ;

ii) alimentation de ladite diode laser par un courant d'alimentation dit initial dont l'intensité est supérieure ou égale à ladite intensité seuil, et acquisition d'une image, dite image initiale, par ledit capteur d'image, ladite image initiale comportant des franges d'interférence transversales s'étendant à travers l'image ;

iii) modification de l'intensité dudit courant d'alimentation et acquisition d'une image par le capteur d'image, cette étape étant répétée jusqu'à l'acquisition d'une image sur laquelle lesdites franges d'interférence sont atténuées par rapport à ladite image initiale, l'intensité du courant correspondant alors à ladite intensité critique.

Par franges d'interférence atténuées, on entend que ces franges d'interférence ne sont pas visibles ou, lorsqu'elles sont visibles, sont atténuées par rapport à celles de l'image initiale. Deux franges d'interférence transversales adjacentes, sur l'image initiale, peuvent être caractérisées par un indicateur de contraste représentant un contraste entre lesdites franges d'interférence. Une atténuation correspond à une réduction dudit indicateur de contraste d'au moins 25%, voire davantage.

Le procédé peut comporter l'une quelconque des caractéristiques suivantes, prises isolément ou selon les combinaisons techniquement réalisables :

- Ladite intensité critique est inférieure à ladite intensité seuil. Elle peut être comprise entre 0.5 fois l'intensité seuil et l'intensité seuil, et de préférence entre 0.7 fois ou 0.8 fois l'intensité seuil et l'intensité seuil.
- Lors des étapes préliminaires i) à iii), un échantillon de référence, représentatif dudit échantillon observé, est disposé entre le capteur d'image et la diode laser. Alternativement, lors des étapes préliminaires i) à iii), aucun échantillon n'est disposé entre le capteur d'image et la diode laser.
- L'échantillon comporte un élément diffractant, apte à former une onde de diffraction sous l'effet de l'illumination par ladite onde lumineuse, de telle sorte que le capteur d'image est exposé à une onde, dite onde d'exposition, comportant l'onde lumineuse incidente transmise par l'échantillon, ainsi que de ladite onde de diffraction. L'échantillon peut notamment comporter un liquide, tel un liquide biologique dans lequel baignent des particules, l'épaisseur de l'échantillon étant par exemple comprise entre 50 $\mu$m et 2 cm. L'échantillon peut également être une lame de tissu dont l'épaisseur est inférieure à 50 $\mu$m.
- Lors de l'étape b), l'intensité du courant l'alimentation est comprise entre 0.5 fois l'intensité seuil et ladite intensité seuil, voire entre 0.5 fois l'intensité seuil et 0.9 fois l'intensité seuil. De préférence, cette intensité est comprise entre 0.7 et 0.9 à 0.95 ou 1 fois l'intensité seuil.
- La diode laser émet dans le domaine spectral visible.

Un autre objet de l'invention est un procédé d'observation d'un échantillon, comportant les étapes suivantes :

a) illumination dudit échantillon à l'aide d'une diode laser, apte à produire une onde lumineuse, dite onde lumineuse incidente, se propageant vers l'échantillon ;

b) acquisition, à l'aide d'un capteur d'image, d'une image de l'échantillon, formée dans un plan de détection, l'échantillon étant disposé entre la diode laser et le capteur d'image, chaque image étant représentative d'une onde lumineuse transmise par l'échantillon sous l'effet de ladite illumination,

le procédé étant caractérisé en ce qu'à ladite diode laser est associée une intensité seuil, correspondant à une intensité d'un courant d'alimentation de la diode au-delà de laquelle un effet laser est obtenu, et que lors de l'illumination de l'échantillon, la diode laser est alimentée par un courant d'alimentation dont l'intensité est strictement inférieure à l'intensité seuil, et par exemple comprise entre 0.5 fois l'intensité seuil et ladite intensité seuil.

De préférence, l'intensité est comprise entre 0.7 fois l'intensité seuil et 0.9 à 0.95 fois l'intensité seuil.

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

## FIGURES

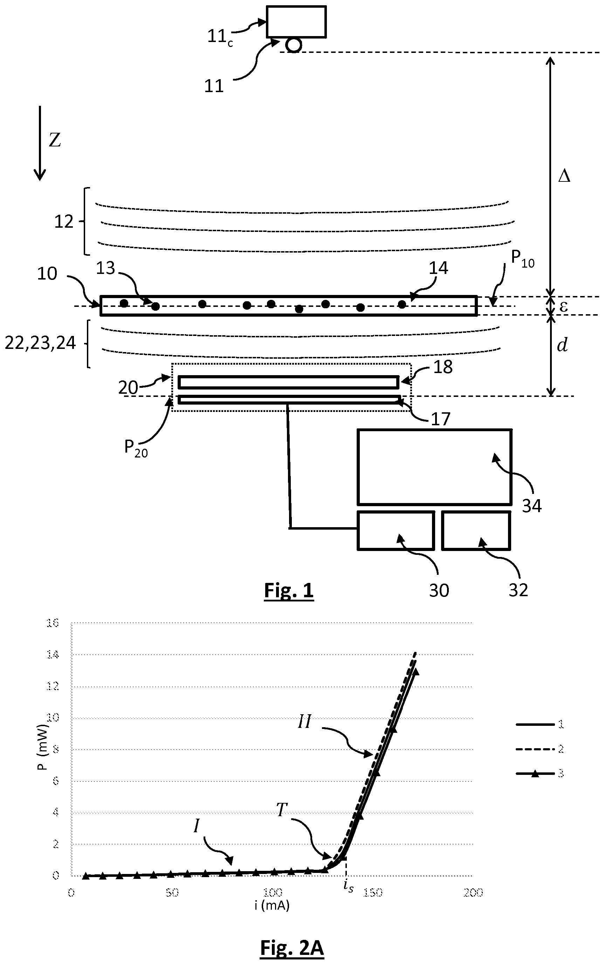

La figure 1 représente un exemple de dispositif d'observation d'un échantillon.

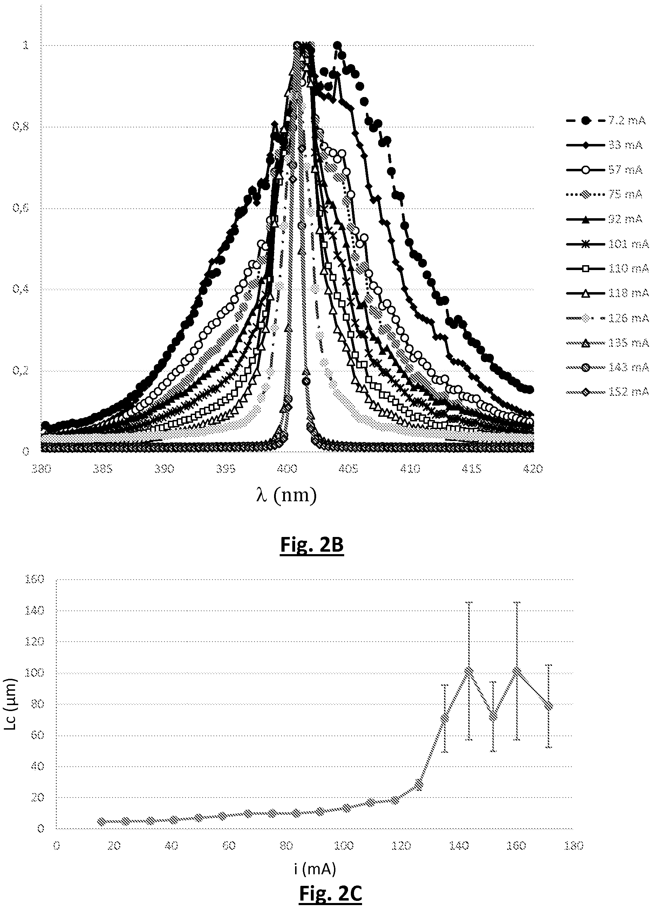

La figure 2A représente une évolution de la puissance lumineuse émise par une diode laser en fonction de l'intensité du courant d'alimentation de ladite diode laser. La figure 2B représente une évolution du spectre lumineux d'une diode laser en fonction de l'intensité du courant d'alimentation de la diode laser. La figure 2C représente une évolution de la longueur de cohérence de l'onde lumineuse émise par ladite diode laser en fonction de l'intensité du courant d'alimentation de la diode laser.

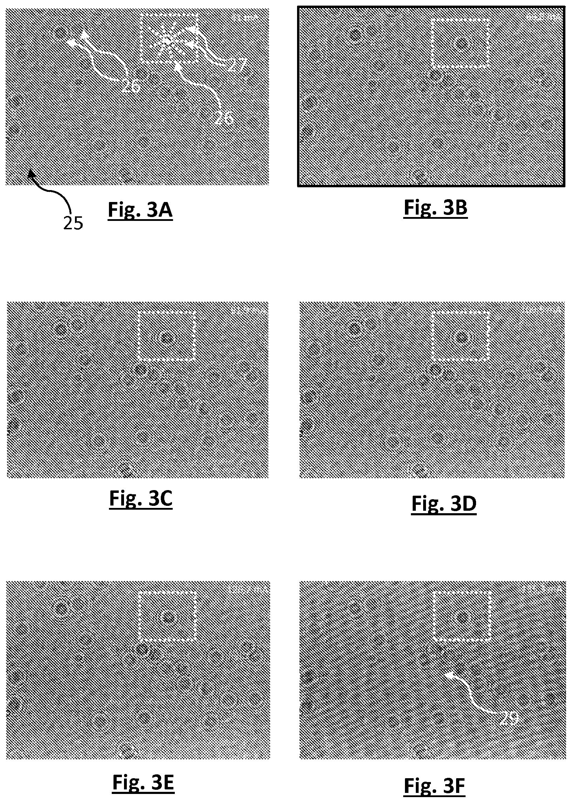

Les figures 3A, 3B, 3C, 3D, 3E, 3F représentent des images d'un échantillon obtenues à l'aide du dispositif décrit en lien avec la figure 1, en considérant différentes intensités du courant d'alimentation de la diode laser permettant l'illumination de l'échantillon.

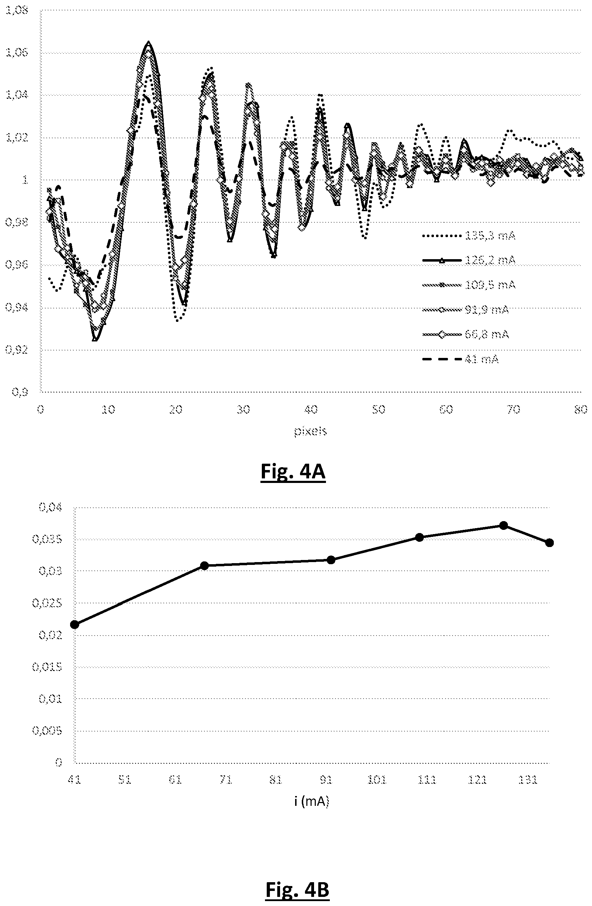

La figure 4A représente l'évolution du profil radial d'une figure de diffraction présente dans les figures 3A, 3B, 3C, 3D, 3E et 3F en fonction de l'intensité du courant d'alimentation de la diode laser.

La figure 4B représente l'évolution de l'écart-type du profil représenté sur la figure 4A en fonction de l'intensité du courant d'alimentation de la diode laser.

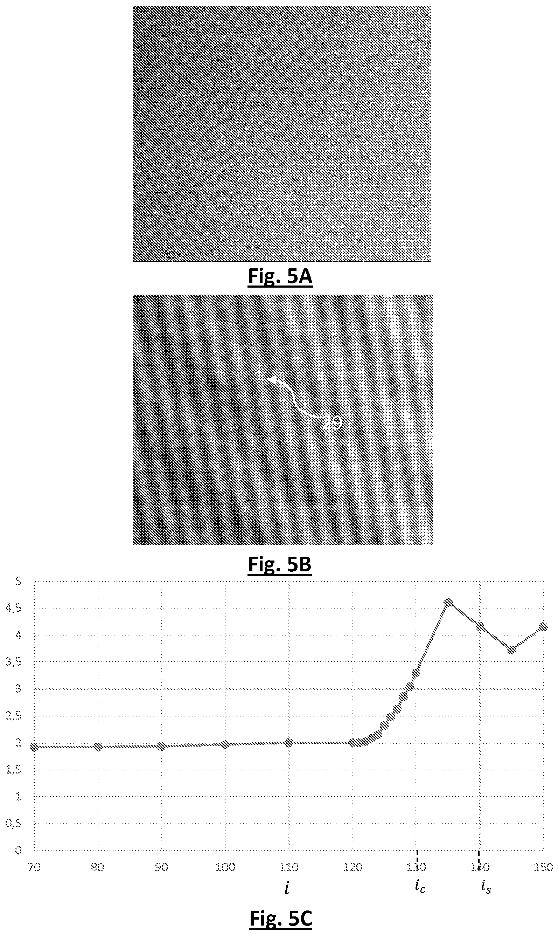

Les figures 5A et 5B représentent des images obtenues à l'aide du dispositif représenté sur la figure 1, sans échantillon interposé entre la diode laser et l'échantillon, l'intensité du courant d'alimentation de la diode laser étant respectivement portée à deux valeurs différentes, respectivement en dessous et en dessus d'une intensité dite de seuil.

La figure 5C représente une évolution d'un coefficient de variation représentatif d'un fond d'images obtenues à l'aide du dispositif représenté sur la figure 1, une chambre fluidique remplie de liquide étant interposée entre la diode laser et l'échantillon, ce coefficient de variation évoluant en fonction de l'intensité du courant d'alimentation de la diode laser.

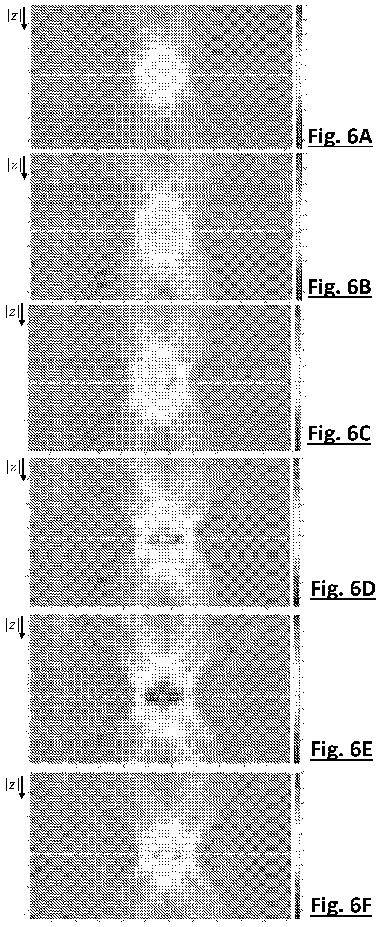

Les figures 6A, 6B, 6C, 6D, 6E et 6F représentent, en fonction d'une distance de reconstruction, l'intensité de pixels s'étendant selon une ligne dans une image reconstruite, cette dernière étant obtenue en appliquant un algorithme de reconstruction holographique respectivement sur des images, acquises par le capteur d'image, de deux billes obtenues en utilisant différentes intensités du courant d'alimentation de la diode laser.

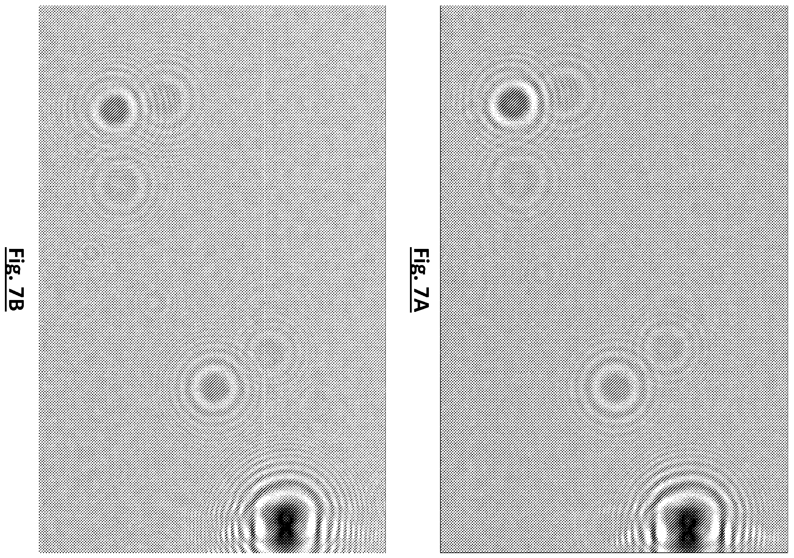

La figure 7A représente une image d'un échantillon obtenue avec un dispositif de l'art antérieur, la source de lumière étant une diode électroluminescente. La figure 7B représente une image d'un échantillon réalisée avec un dispositif selon l'invention, l'intensité de la diode laser étant judicieusement ajustée.

## EXPOSE DE MODES DE REALISATION PARTICULIERS

La figure 1 représente un exemple de dispositif objet de l'invention. Une diode laser 11 est apte à produire une onde lumineuse 12, dite onde lumineuse incidente, en direction d'un échantillon 10, selon un axe de propagation Z. Dans cet exemple, la diode laser est une diode commercialisée par Civillaser, émettant à une longueur d'onde voisine de 405 nm. Ainsi, la diode laser émet dans le domaine spectral visible.

L'échantillon 10 peut être un échantillon biologique que l'on souhaite caractériser. L'échantillon 10 peut également comporter un milieu 14, solide ou liquide, comportant des particules 13 à caractériser. Il peut par exemple s'agir de particules biologiques dans un milieu de culture, ou dans un liquide corporel. Par particule biologique, on entend une cellule, une bactérie ou autre microorganisme, un champignon, une spore...Le terme particules peut également désigner des microbilles, par exemple des microbilles métalliques, des microbilles de verre ou des microbilles organiques, couramment mises en œuvre dans des protocoles biologiques. Il peut également s'agir de gouttelettes insolubles baignant dans un milieu liquide, par exemple des gouttelettes lipidiques dans une émulsion de type huile dans eau. Ainsi, le terme particule désigne à la fois des particules endogènes, initialement présentes dans l'échantillon examiné, et des particules exogènes, ajoutées à cet échantillon avant l'analyse. D'une façon générale, une particule a une taille avantageusement inférieure à 1 mm, voire inférieure à 500 $\mu$m, et de préférence une taille comprise entre 0.5 $\mu$m et 500 $\mu$m. L'épaisseur $\varepsilon$ de l'échantillon 10 permet une transmission d'une partie de la lumière incidente 12 vers le capteur d'image 20, formant une onde lumineuse dite transmise 22. Lorsque l'échantillon est un liquide comportant des particules, l'épaisseur $\varepsilon$ peut être comprise entre quelques dizaines de microns et quelques millimètres, voire centimètres, en fonction de l'atténuation de la lumière incidente par l'échantillon.

Selon un autre exemple, l'échantillon peut être une fine lame de tissu, ou lame d'anatomopathologie, comportant une fine épaisseur de tissu déposée sur une lame transparente. Par fine épaisseur, on entend une épaisseur de préférence inférieure à 100 $\mu$m, et de préférence inférieure à 10 $\mu$m, typiquement quelques micromètres.

La distance $\Delta$ entre la diode laser et l'échantillon est de préférence supérieure à 1 cm. Elle est de préférence comprise entre 2 et 30 cm. De préférence, la diode laser, vue par l'échantillon, est considérée comme ponctuelle. Cela signifie que son diamètre (ou sa diagonale) est préférentiellement inférieure au dixième, mieux au centième de la distance entre l'échantillon et la diode laser. Ainsi, de préférence, la lumière parvient à l'échantillon sous la forme d'ondes planes, ou pouvant être considérées comme telles.

Le dispositif comporte un capteur d'image 20, apte à former une image selon un plan de détection $P_{20}$. Dans l'exemple représenté, il s'agit d'un photodétecteur matriciel comportant une matrice de pixels, de type CCD ou un CMOS. Les CMOS sont les capteurs d'images préférés, car la taille des pixels est plus faible, ce qui permet d'acquérir des images dont la résolution spatiale est plus favorable. Le capteur d'image comprend une matrice de pixels 17, au-dessus de laquelle est disposée une fenêtre de protection transparente 18. Dans cet exemple, la fenêtre de protection transparente 18 est placée à 125 $\mu$m de la matrice de pixels 17 et son épaisseur s'élève à 400 $\mu$m. La distance entre la matrice de pixels 17 et la fenêtre de protection 18 est généralement comprise entre quelques dizaines de $\mu$m à 150 ou 200 $\mu$m. Dans cet exemple, le détecteur est un capteur CMOS 8 bits comprenant 3884 x 2764 pixels, avec un pas inter-pixels est de 1.67 $\mu$m. Le plan de détection $P_{20}$ s'étend de préférence perpendiculairement à l'axe de propagation Z de l'onde lumineuse incidente 12. Les capteurs d'image dont le pas inter pixel est inférieur à 3 $\mu$m sont préférés, afin

d'améliorer la résolution spatiale de l'image.

Dans cet exemple, la distance *d* entre l'échantillon 10 et la matrice de pixels 17 du capteur d'image 20 est inférieure à 2 cm, et de préférence inférieure à 1 cm. Elle est par exemple de l'ordre de 5 mm. La proximité de l'échantillon 10 et du capteur d'image 20 permet d'obtenir un champ d'observation large. De façon alternative, il est possible de rapprocher l'échantillon de la diode laser, auquel cas le champ d'observation diminue. Toutefois, une telle configuration permet d'obtenir des informations plus détaillées sur l'échantillon.

On remarque l'absence d'optique de formation d'image, par exemple une optique de grossissement entre le capteur d'image 20 et l'échantillon 10. Cela n'empêche pas la présence éventuelle de microlentilles de focalisation au niveau de chaque pixel du capteur d'image 20, ces dernières n'ayant pas de fonction de grandissement de l'image.

Sous l'effet de l'onde lumineuse incidente 12, l'échantillon 10 peut engendrer une onde diffractée 23, susceptible de produire, au niveau du plan de détection $P_{20}$, des interférences, en particulier avec l'onde lumineuse 22 transmise par l'échantillon. Ces interférences donnent lieu, sur l'image 25 acquise par le capteur d'image 20, à une pluralité de figures de diffraction élémentaires 26, chaque figure de diffraction élémentaire comportant une zone centrale et plusieurs anneaux de diffraction concentriques, chaque anneau constituant une frange circulaire d'interférence. Chaque figure de diffraction élémentaire est due à un objet diffractant 13 dans l'échantillon, en l'occurrence une particule. L'onde lumineuse 24 à laquelle est exposé le capteur d'image 20 comprend :

- une composante 23 résultant de la diffraction de l'onde lumineuse incidente 12 par l'échantillon ;

- une composante 22 résultant de la transmission de l'onde lumineuse incidente 12 par l'échantillon.

Ces deux composantes engendrent des interférences sur l'image 25 acquise par le capteur d'image, ces interférences se présentant sous la forme de figures de diffraction élémentaires 26. Des exemples de figures de diffraction élémentaires seront présentés ultérieurement, en lien avec les figures 3A à 3F, ou 7A et 7B. Généralement, à chaque élément diffractant dans l'échantillon peut être associé une figure de diffraction élémentaire 26. Plus l'échantillon 10 est rapproché de la diode laser 11, plus les figures de diffraction élémentaires 26 sont détaillées, le nombre d'anneaux identifiables sur le capteur d'image étant plus élevé. Plus l'échantillon 10 est rapproché du capteur d'image 20, plus le champ d'observation est important, conduisant à l'observation d'un nombre plus important de figures de diffraction élémentaires 26 sur une même image 25.

Un processeur 30, par exemple un microprocesseur, est apte à traiter chaque image 25 acquise par le capteur d'image 20. En particulier, le processeur est un microprocesseur relié à une mémoire programmable 32 dans laquelle est stockée une séquence d'instructions pour effectuer les opérations de traitement d'images et de calculs décrites dans cette description. Le processeur 30 peut également être relié à un écran 34.

Un exemple de traitement d'image est l'application d'un algorithme de reconstruction holographique, permettant de reconstruire une image 28, dite image reconstruite, à partir de l'image 25 acquise par le capteur d'image. Ce type d'algorithme est classique et sera abordé dans la suite de la description, en lien avec les figures 6A à 6F.

La diode laser 11 est reliée à un circuit électrique $11_c$, permettant l'alimentation de la diode laser en un courant électrique. La diode laser 11 comporte une zone active, réalisée dans un matériau semi-conducteur. Au-delà d'une certaine valeur d'intensité, dite intensité de seuil laser $i_s$, une émission laser est observée. Cette intensité de seuil laser $i_s$ correspond à une injection d'électrons suffisante à l'obtention d'un effet laser dans la zone active de la diode laser.

La diode laser utilisée est destinée à être alimentée par un courant d'alimentation dont l'intensité nominale $i_n$ est égale à 150 mA. Les inventeurs ont mesuré la puissance optique délivrée par la diode laser à l'aide d'un puissance-mètre optique, en fonction de l'intensité *i* du courant d'alimentation. Trois mesures ont été réalisées, à trois instants différents 1,2 et 3, en faisant varier l'intensité *i* du courant d'alimentation, de part et d'autre de l'intensité nominale, entre 15 mA et 170 mA. Les courbes obtenues sont présentées sur la figure 2A. On observe une variation de la puissance optique caractéristique d'une diode laser. Chaque courbe présente :

- une première partie, dans laquelle l'injection de charges dans la zone active est insuffisante. Selon ce premier régime de fonctionnement *I*, l'émission de lumière par la diode laser est dite spontanée, et la puissance lumineuse émise est proportionnelle à la densité de porteurs de charges injectés dans la zone active, c'est-à-dire à l'intensité *i* du courant d'alimentation ;

- une deuxième partie, dans laquelle l'injection de charges est suffisante pour augmenter significativement le rendement de la diode laser, se traduisant par une apparition d'une émission de lumière dite stimulée. Selon ce deuxième régime de fonctionnement *II,* ou régime de fonctionnement laser, un effet laser est obtenu et la puissance optique augmente linéairement avec l'intensité *i*, avec un effet d'amplification se traduisant par une augmentation de la pente de la courbe. L'intensité nominale $i_n$ de la diode laser, égale à 150 mA, correspond à ce régime de fonctionnement.

Une transition entre les premier et deuxième régimes de fonctionnement apparaît entre 125 mA et 135 mA, sans qu'une valeur précise ne puisse être établie. En effet, les propriétés de la diode laser fluctuent, en particulier en fonction de la température. Par ailleurs, il existe un régime de fonctionnement dit transitoire $T$, entre les deux régimes de fonctionnement précédemment évoqués, dans lequel l'émission de la diode est stimulée, sans pour autant compenser certaines pertes de la diode. L'évolution de la puissance optique avec l'intensité n'est plus linéaire, du fait desdites pertes. Dans les courbes représentées, ce régime transitoire s'étend entre des intensités $i$ du courant d'alimentation comprises entre 120 et 135 mA. On peut alors considérer que la valeur d'intensité seuil $i_s$, correspondant à un courant d'alimentation de la diode dit courant de seuil laser, est de 140 mA.

Dans cette description, l'intensité seuil $i_s$ désigne l'intensité au-delà de laquelle une amplification de la lumière stimulée se produit, ce qui correspond à l'intensité minimale du régime de fonctionnement laser (régime $II$) précédemment décrit. Comme on peut l'observer sur la figure 2A, cette intensité seuil $i_s$ est l'intensité au-delà de laquelle la puissance optique, résultant de l'effet laser, augmente linéairement avec l'intensité du courant d'alimentation de la diode laser.

A chaque valeur de l'intensité $i$, on a également déterminé le spectre d'émission de l'onde lumineuse 12 produite par la diode laser 11, à l'aide d'un spectromètre. Les différents spectres sont reportés sur la figure 2B. Chaque spectre présente un pic d'émission centré sur une longueur d'onde centrale $\lambda_c$ de 401 nm. On observe, ce qui était attendu, un élargissement du pic d'émission dès lors que l'intensité $i$ du courant d'alimentation est inférieure à la valeur seuil $i_s$.

La longueur de cohérence $L_c$ de l'onde lumineuse 12 produite par la diode laser 11 peut être déterminée par l'expression suivante :

$$L_c = \frac{2\ln(2)}{\pi} \times \frac{\lambda^2}{\Delta\lambda}$$

(1) où $\lambda$ désigne la longueur d'onde et $\Delta\lambda$ représente la largeur du pic d'émission.

Cette expression est valable sous réserve que le pic du spectre d'émission soit assimilable à une distribution gaussienne, ce qui est l'hypothèse retenue dans cet exemple.

La longueur de cohérence $L_c$ traduit le fait que si deux objets, se comportant comme des sources de lumière secondaires, par exemple des objets réfléchissants ou diffractants, sont espacés d'une distance inférieure à la longueur de cohérence, les ondes lumineuses émises par ces objets forment des interférences.

La figure 2C représente la longueur de cohérence $L_c$ de l'onde lumineuse 12 émise par la diode laser en fonction de l'intensité $i$ du courant d'alimentation. Cette longueur de cohérence est faible, de l'ordre de quelques dizaines de microns, et inférieure à 50 microns (micromètres), voire 20 microns, lorsque l'intensité $i$ du courant d'alimentation est inférieure à l'intensité seuil $i_s$. Au-delà du seuil d'intensité $i_s$, la longueur de cohérence atteint voire dépasse 100 $\mu$m, et ne peut pas être déterminée avec une grande précision du fait de la résolution spectrale du spectromètre utilisé.

La longueur de cohérence $L_c$ est un paramètre déterminant la capacité d'un échantillon observé à former des interférences pouvant être détectées. Dans l'exemple représenté sur la figure 1, l'échantillon comporte un liquide transparent 14, ou pouvant être considéré comme tel, dans lequel baignent des particules 13. Ces particules sont diffractantes et entraînent l'apparition de figures de diffraction 26 sur des images 25 formées par le capteur d'image 20.

Les inventeurs ont étudié l'effet d'une variation de l'intensité $i$ du courant d'alimentation de la diode laser 11 sur les images acquises par le capteur d'image 20. Les figures 3A, 3B, 3C, 3D, 3E et 3F représentent respectivement des images d'un échantillon alors que l'intensité $i$ du courant d'alimentation de la diode laser est respectivement égale à 41 mA, 67 mA, 92 mA, 110 mA, 126 mA, 135 mA. Sur ces figures apparaissent des figures de diffractions élémentaires 26, la plupart pouvant être associées à une particule 13 présente dans l'échantillon 10. Sur cet exemple, l'échantillon est constitué d'un mélange de billes de latex de diamètres 3 $\mu$m et 6 $\mu$m disposées dans un tampon salin de type PBS, acronyme de Phosphate Buffered Saline, signifiant tampon phosphate salin. Sur chacune de ces images, le temps d'exposition a été ajusté de manière à ce que le niveau de gris moyen de chaque image soit similaire, de façon à ce que ces images soient comparables malgré l'évolution de la puissance d'éclairement. On peut observer que lorsque l'intensité du courant d'alimentation augmente, le nombre d'anneaux composant chaque figure de diffraction tend à augmenter, ce qui est attendu puisque ces anneaux correspondent à des franges d'interférence circulaires. Ainsi, l'information présente dans l'image est plus riche. Par ailleurs, comme indiqué en lien avec l'art antérieur, de telles figures de diffraction peuvent faire l'objet d'une reconstruction holographique, et il est admis que les résultats d'une telle reconstruction sont améliorés lorsque le nombre et le contraste des anneaux de diffraction augmentent.

Une autre constatation est l'apparition de franges d'interférence transversales 29, sensiblement rectilignes, et s'étendant en travers de l'image lorsque l'intensité du courant d'alimentation est supérieure ou voisine de l'intensité seuil $i_s$. L'apparition de ces franges d'interférence transversales dégrade significativement le rapport signal sur bruit de l'image. Par opposition aux franges d'interférence concentriques, formant les figures de diffraction élémentaire 26, localisées dans certaines parties d'une image 25 formée par le capteur d'image 20, les franges d'interférences transversales 29 s'étendent à travers de toute l'image. Elles constituent un bruit affectant à la fois les zones de l'image présentant des figures de diffraction élémentaires 26, ainsi que les zones de l'image, formant le fond de l'image, dépourvues de figures de diffraction élémentaires. Ces franges transversales peuvent être rectilignes, elliptiques ou circulaires. Le terme transversal désigne le fait qu'elles affectent l'ensemble de l'image 25, en s'étendant d'un bord à l'autre de cette image.

Sur chaque image 25, on a sélectionné une figure de diffraction élémentaire 26, dont on a établi un profil radial moyen. Par profil radial moyen, on entend un profil d'amplitude obtenu en déterminant une moyenne de différents profils élémentaires, chaque profil élémentaire étant réalisé selon un axe 27 s'étendant entre le centre de la figure de diffraction sélectionnée et une extrémité de ladite figure. Pour une même figure de diffraction 26, plusieurs axes 27 sont considérés, comme représenté sur la figure 3A, sur laquelle on a représenté les axes 27 sous la forme de pointillés blancs. La figure élémentaire 26 sélectionnée sur chaque image est encadrée par un cadre en pointillés blancs. La figure 4A représente le profil radial moyen obtenu sur chacune des images 3A à 3F. On constate que plus l'intensité $i$ augmente, plus le nombre d'anneaux est élevé.

On a déterminé l'écart type de chaque profil radial représenté sur la figure 4A. La figure 4B illustre l'évolution de cet écart type en fonction de l'intensité $i$ du courant d'alimentation de la diode laser 11. Cet indicateur est représentatif du contraste de la figure de diffraction sélectionnée en prenant en compte l'ensemble des anneaux de diffraction identifiables. Il atteint un maximum à $i$ = 121 mA puis diminue lorsque l'intensité dépasse cette valeur. Plus le contraste d'une figure de diffraction est élevée, plus cette figure est identifiable et meilleure sera la qualité d'une image reconstruite sur la base de cette figure de diffraction. Les figures 3A à 3F, ainsi que les figures 4A et 4B montrent qu'il existe une plage d'intensité optimale du courant d'alimentation de la diode, comprise entre 60 mA et 125 mA, dans laquelle le contraste des figures de diffraction 26 est élevé. Elles montrent également qu'au-delà de 130 mA, l'apparition de franges d'interférence, affectant la totalité de l'image 25, augmente considérablement le niveau de bruit de l'image. De plus, ce bruit est non stationnaire, ce qui le rend difficile à éliminer. Ainsi, il est important d'utiliser la diode laser en adaptant son courant d'alimentation de telle sorte que son intensité $i$ soit suffisamment élevée pour que les figures de diffractions soient contrastées, et présentent un nombre suffisant d'anneaux de diffraction, tout en étant inférieure à une intensité dite intensité critique $i_c$, au-delà de laquelle apparaissent des franges d'interférence s'étendant au travers de l'image 25 acquise par le capteur d'image 20. On constate que dans cet exemple, la plage optimale de l'intensité du courant d'alimentation s'étend entre 60 mA et 135 mA, soit environ 0.5 fois l'intensité seuil $i_s$ et ladite intensité seuil $i_s$, et semble particulièrement optimale entre 80 mA et 120 mA, soit entre 0.6 fois et 0.9 fois ladite intensité seuil $i_s$.

Les figures 5A et 5B montrent des images obtenues par le capteur d'image 20 sans interposer l'échantillon 10 entre le capteur d'image 20 et la diode laser 11, l'intensité $i$ du courant d'alimentation étant respectivement égale à 120 mA, soit en dessous de l'intensité seuil $i_s$, et 140 mA, soit supérieure ou égale à l'intensité seuil. On observe l'apparition des franges d'interférence lorsque l'intensité dépasse une valeur critique $i_c$, cette dernière étant inférieure ou égale à l'intensité seuil $i_s$. Il semble qu'une longueur de cohérence trop importante soit nuisible à la qualité des images acquises par le capteur. Il est donc préférable d'ajuster l'intensité $i$ du courant d'alimentation de la diode laser de telle sorte que la longueur de cohérence de l'onde lumineuse 12 émise par la diode laser soit inférieure à 100 $\mu$m, voire inférieure à 80 $\mu$m ou 50 $\mu$m. Les inventeurs attribuent l'apparition de telles franges d'interférence à des réflexions parasites se produisant entre la matrice de pixels 17, et la fenêtre de protection 18 du détecteur, distante d'environ 100 $\mu$m de ladite matrice de pixels. De telles franges peuvent également apparaître lorsque l'échantillon présente deux interfaces parallèles séparées de cet ordre de grandeur. Typiquement, l'épaisseur $\varepsilon$ d'un l'échantillon observé est comprise entre 20 $\mu$m et 200 $\mu$m, voire 500 $\mu$m.

Les inventeurs ont évalué l'évolution d'un coefficient de variation CV d'images acquises par le capteur d'image 25 en faisant varier l'intensité $i$ du courant d'alimentation de la diode laser 11 entre 70 mA et 150 mA, l'échantillon 10 étant constitué d'une chambre fluidique d'épaisseur $\varepsilon$ = 100 $\mu$m, remplie d'un tampon salin, sans particule diffractante. Par coefficient de variation CV d'une image, on entend l'écart type de l'image divisé par la moyenne de ladite image. Le temps d'exposition de chaque image a été ajusté de façon que l'intensité moyenne de chaque image soit constante, afin de compenser la variation de la puissance d'éclairement de la diode. Ce coefficient de variation a été calculé en excluant certaines parties de l'image présentant des figures de diffraction parasites. Il est donc représentatif du « fond » de chaque image, c'est-à-dire de la zone dépourvue d'éventuelles figures de diffraction. La figure 5C représente l'évolution de ce coefficient de variation CV en fonction de l'intensité $i$ du courant d'alimentation de la diode laser. On observe une stabilité entre 70 mA et 120 mA, suivie d'une augmentation significative traduisant l'apparition d'une structuration de l'image, c'est-à-dire les franges d'interférence précédemment évoquées en lien avec les figures 3F et 5B.

Les inventeurs ont constaté qu'en disposant un échantillon entre le capteur d'image et la diode laser, l'intensité critique pouvait varier. Il semble donc que l'apparition des franges d'interférence est également dépendante de l'échantillon 10 placé entre la diode laser 11 et le capteur d'image 20.

De ce fait, l'intensité $i$ du courant d'alimentation de la diode laser 11 est de préférence ajustée au cas par cas, en effectuant les étapes, dites préliminaires, suivantes :

- acquisition d'une image initiale, dans les conditions nominales d'utilisation de la diode laser, c'est-à-dire en adoptant une intensité $i$ du courant d'alimentation supérieure à l'intensité seuil $i_s$, de telle sorte que l'onde lumineuse 12 émise par la diode laser soit obtenue par effet laser. Cette image présente des franges d'interférence transversales la rendant peu appropriée à une reconstruction holographique ;

- variation de l'intensité *i* du courant d'alimentation de la diode laser et notamment diminution de cette intensité, et acquisition d'une image par le capteur d'image, cette étape étant répétée jusqu'à observer une atténuation significative des franges d'interférence transversales. Lorsqu'une telle atténuation est observée, on considère que l'intensité du courant d'alimentation de la diode laser correspond à ladite intensité critique $i_c$.

L'intensité *i* du courant d'alimentation de la diode laser 11, propice à l'observation d'un échantillon par imagerie sans lentille, est alors déterminée en fonction de cette intensité critique $i_c$. Elle peut être égale à cette intensité critique, ou légèrement inférieure, par exemple comprise entre 0.8 $i_c$ et $i_c$. On considère en effet que cette intensité *i* doit être de préférence proche de l'intensité critique. Au-delà, les franges d'interférence apparaissent. Au deçà, la puissance optique diminue. En se plaçant en dessous de l'intensité critique, par exemple en dessous de 0.9 $i_c$ ou 0.95 $i_c$, on s'affranchit d'éventuelles fluctuations de l'intensité critique, par exemple sous l'effet de dérives de la diode laser, par exemple des dérives thermiques. Une telle « marge de sécurité » peut s'avérer utile.

Les étapes mentionnées ci-dessus sont qualifiées d'étapes préliminaires, car sont mises en œuvre préalablement à l'observation d'un échantillon. Elles sont réalisées de préférence en plaçant un échantillon dit de référence $10_{ref}$, représentatif des échantillons à observer par la suite. Elles peuvent également être mises en œuvre sans échantillon, le capteur d'image 20 étant placé directement en vis-à-vis de la diode laser 11, sans échantillon interposé.

Deux franges d'interférence consécutives peuvent peut être caractérisées par un indicateur de contraste *ind,* représentant une différence entre un niveau maximal d'intensité $S_{max}$, représentatif d'une frange claire et un niveau minimal d'intensité $S_{min}$, représentatif d'une frange sombre adjacente à ladite frange claire. L'indicateur de contraste peut être obtenu par une simple différence $S_{max} - S_{min}$, ou en normalisant cette différence par une somme $S_{max} + S_{min}$.

Ainsi, l'indicateur de contraste peut s'exprimer de la façon suivante :

$$ind = S_{max} - S_{min} \ (2)$$

ou

$$ind = \frac{S_{max} - S_{min}}{S_{max} + S_{min}} \ (3),$$

l'expression (3) correspondant à une définition usuelle du contraste.

L'intensité critique $i_c$ est atteinte lorsque les franges d'interférence n'apparaissent plus significativement sur l'image acquise par le capteur d'image, ou qu'elles sont atténuées de façon suffisamment significative. Ainsi, une atténuation dite significative correspond à une diminution de l'indicateur de contraste *ind,* relatif aux franges d'interférence transversales, de 25%, voire 50%, voire 80% ou davantage, entre l'image initiale et l'image obtenue à l'intensité critique.

Comme précédemment évoqué, chaque image 25 acquise par le capteur d'image peut faire l'objet d'une reconstruction holographique, visant à convoluer ladite image par un opérateur de propagation $h(x, y, z)$. L'opérateur de propagation $h(x, y, z)$ a pour fonction de décrire une propagation de la lumière entre le capteur d'image 20 et un point de coordonnées (x,y,z). Les principes de la reconstruction holographique sont par exemple décrits dans la publication Ryle et al, « Digital in-line holography of biological specimens », Proc. Of SPIE Vol.6311 (2006). Une reconstruction holographique permet de déterminer une expression complexe U(x,y,z) de l'onde lumineuse 24, à laquelle est exposé le détecteur, en tout point de coordonnées (x,y,z) de l'espace, et en particulier dans un plan situé à une distance |z| du capteur d'image. Il est alors possible de déterminer l'amplitude u(x,y,z) et la phase cp(x,y,z) de cette onde lumineuse selon les expressions :

$$u(x,y,z) = abs \ [U(x,y,z)] \ (4) \ ,$$

ou

$$\varphi(x,y,z) = arg \ [U(x,y,z)] \ (5).$$

Les opérateurs abs et arg désignant respectivement le module et l'argument.

La reconstruction numérique peut notamment reposer sur le modèle de diffraction de Fresnel.

Dans cet exemple, l'opérateur de propagation est la fonction de Fresnel-Helmholtz, telle que :

$$h(x, y, z) = \frac{1}{j\lambda z} e^{j2\pi\frac{z}{\lambda}}\exp(j\pi\frac{x^2+y^2}{\lambda z}). \ (6)$$

où $\lambda$ désigne la longueur d'onde.

Ainsi,

$$U(x, y, z) = \frac{1}{j\lambda z} e^{j2\pi\frac{z}{\lambda}} \iint \sqrt{S(x', y')} \exp(j\pi\frac{(x-x')^2+(y-y'^2)}{\lambda z})dx'dy' \ (7)$$

où

- $x'$ et $y'$ désignent les coordonnées dans le plan du capteur d'image ;
- $S(x',y')$ représente l'intensité de l'image acquise par le capteur d'image aux coordonnées $x'$ et $y'$ ;
- $x$ et $y$ désignent les coordonnées dans le plan de reconstruction, ce dernier étant situé à une distance $|z|$ du capteur d'image ;
- $z$ désigne la coordonnée de l'image reconstruite selon l'axe de propagation Z de l'onde lumineuse incidente.

Les inventeurs ont obtenu une image 25, à l'aide du dispositif représenté sur la figure 1, en disposant deux billes de latex de diamètre 6 $\mu$m côte à côte, au fond d'une chambre fluidique d'épaisseur 100 $\mu$m, remplie d'un tampon salin PBS précédemment défini. L'image 25 a été acquise par le capteur d'image 20 en modulant l'intensité $i$ du courant d'alimentation de la diode laser 11, entre 41 mA et 135 mA.

Cette image a fait l'objet d'une reconstruction holographique, selon les principes exposés ci-dessus, en considérant une valeur de z égale à la distance entre le capteur d'image et lesdites billes. Les images 6A, 6B, 6C, 6D, 6E et 6F montrent l'intensité des pixels des images reconstruites 28 en fonction de la distance de reconstruction $|z|$. Plus précisément, chaque image représente une distribution de l'intensité des pixels situés le long d'une ligne passant par les deux billes, en fonction de la distance de reconstruction $|z|$, l'intensité $i$ du courant d'alimentation de la diode laser 11 s'élevant respectivement à 41 mA, 67 mA, 92 mA, 110 mA, 126 mA et 135 mA. La ligne en pointillés correspond à une distance de reconstruction égale à la distance entre le détecteur et les billes. On observe que la figure 6E, correspondant à $i$ = 126 *mA,* est optimale, sachant que les images 6D ($i$ = 110 mA) ou 6C ($i$ = 92 mA) permettent également une séparation nette des billes sur l'image reconstruite 28. L'image 6F ($i$ = 135 mA) permet une séparation satisfaisante, mais est affectée d'un bruit de fond élevé dans le reste de l'image, du fait de la présence des franges d'interférence transversales précédemment décrites.

Les figures 7A et 7B représentent des images acquises à l'aide d'un capteur d'image lorsque la source de lumière est respectivement une diode électroluminescente bleue, et une diode laser, dont l'intensité est égale à l'intensité critique $i_c$, en l'occurrence 125 mA. Les figures de diffraction formées sur la figure 7B comportent davantage d'anneaux de diffraction identifiables que celles formées sur la figure 7A.

L'utilisation d'une diode laser, sous réserve d'un ajustement de l'intensité de son courant d'alimentation, permet d'obtenir une observation plus précise d'un échantillon.

L'invention pourra être mise en œuvre dans l'analyse d'un fluide corporel, à des fins de détection et/ou d'identification de particules composant ledit fluide. Elle peut également permettre la caractérisation de fines lames de tissus biologiques. En dehors de la biologie, l'invention pourra s'appliquer à la détection et/ou l'identification de particules dans des fluides industriels, dans l'agroalimentaire, ou dans des matrices solides.

**Revendications**

1. Procédé d'observation d'un échantillon (10), comportant les étapes suivantes :

   a) illumination dudit échantillon à l'aide d'une diode laser (11), apte à émettre une onde lumineuse incidente (12) se propageant vers l'échantillon, ladite diode laser étant alimentée par un courant d'alimentation, de telle sorte qu'un effet laser est obtenu lorsqu'une intensité dudit courant d'alimentation ($i$) dépasse une intensité dite seuil ($i_s$);
   b) acquisition, à l'aide d'un capteur d'image (20), d'une image (25) de l'échantillon, ce dernier étant disposé entre la diode laser (11) et le capteur d'image (20), chaque image étant représentative d'une onde lumineuse (24) transmise par l'échantillon sous l'effet de ladite illumination ;

le procédé étant **caractérisé en ce que** l'intensité ($i$) du courant d'alimentation de ladite diode laser est inférieure ou égale à une intensité ($i_c$) dite critique, ladite intensité critique étant déterminée, préalablement à l'étape a) selon les étapes préliminaires suivantes :

i) placement de la diode laser (11) de telle sorte que l'onde lumineuse incidente (12) qu'elle émet se propage jusqu'au capteur d'image (20) ;

ii) alimentation de la diode laser (11) par un courant d'alimentation dit initial dont l'intensité est supérieure ou égale à ladite intensité seuil ($i_s$), et acquisition d'une image, dite image initiale, par ledit capteur d'image, ladite image initiale présentant des franges d'interférence transversales ;

iii) modification de l'intensité du courant d'alimentation et acquisition d'une image par le capteur d'image (20), cette étape étant répétée jusqu'à l'acquisition d'une image présentant des franges d'interférence transversales atténuées par rapport à l'image initiale, l'intensité du courant d'alimentation correspondant alors à l'intensité critique ($i_c$).

2. Procédé d'observation d'un échantillon (10) selon la revendication 1, dans lequel ladite intensité critique ($i_c$) est inférieure à ladite intensité seuil ($i_s$).

3. Procédé d'observation d'un échantillon (10) selon la revendication 2, dans lequel ladite intensité critique est comprise entre 0.7 fois l'intensité seuil ($i_s$) et l'intensité seuil ($i_s$), ou entre 0.8 fois l'intensité seuil ($i_s$) et l'intensité seuil ($i_s$).

4. Procédé d'observation d'un échantillon selon l'une quelconque des revendications précédentes, dans lequel sur l'image initiale, deux franges d'interférences transversales adjacentes sont **caractérisées par** un indicateur de contraste (*ind*), représentatif d'un contraste entre lesdites franges d'interférence, l'intensité critique correspondant à une réduction dudit indicateur de contraste d'un facteur supérieure à 25%.

5. Procédé d'observation d'un échantillon (10) selon l'une quelconque des revendications précédentes, dans lequel lors des étapes préliminaires i) à iii), un échantillon de référence, représentatif dudit échantillon observé, est disposé entre le capteur d'image (20) et la diode laser (11).

6. Procédé d'observation d'un échantillon (10) selon l'une quelconque des revendications 1 à 4 dans lequel lors des étapes préliminaires i) à iii), aucun échantillon n'est disposé entre le capteur d'image (20) et la diode laser (11).

7. Procédé d'observation d'un échantillon (10) selon l'une quelconque des revendications précédentes, dans lequel l'échantillon (10) comporte un élément diffractant (13), apte à former une onde de diffraction (23) sous l'effet de l'illumination par ladite onde lumineuse (12), de telle sorte que le capteur d'image est exposé à une onde, dite onde d'exposition (24), comportant l'onde lumineuse incidente transmise (22) par l'échantillon, ainsi que de ladite onde de diffraction (23).

8. Procédé d'observation d'un échantillon (10) selon la revendication 1, dans lequel lors de l'étape b) l'intensité du courant l'alimentation ($i$) est comprise entre 0.5 fois l'intensité seuil et l'intensité seuil ($i_s$) ou entre 0.7 fois l'intensité seuil et l'intensité seuil.

9. Procédé d'observation d'un échantillon (10) selon la revendication 1, dans lequel lors de l'étape b) l'intensité du courant l'alimentation ($i$) est comprise entre 0.5 fois l'intensité seuil ($i_s$) et 0.9 fois l'intensité seuil ou entre 0.7 fois l'intensité seuil et 0.9 fois l'intensité seuil.

10. Procédé d'observation d'un échantillon (10) selon l'une quelconque des revendications précédentes, dans lequel aucune optique de grossissement ne s'étend entre l'échantillon et le capteur d'image (20).

**Patentansprüche**

1. Verfahren zur Beobachtung einer Probe (10), welches die folgenden Schritte umfasst:

a) Beleuchtung der Probe mithilfe einer Laserdiode (11), die geeignet ist, eine einfallende Lichtwelle (12) zu emittieren, die sich in Richtung der Probe ausbreitet, wobei die Laserdiode von einem Speisestrom gespeist wird, derart, dass ein Lasereffekt erzielt wird, wenn eine Stärke des Speisestroms ($i$) eine sogenannte Schwellenstromstärke ($i_s$) überschreitet;

b) Erfassung, mithilfe eines Bildsensors (20), eines Bildes (25) der Probe, wobei diese Letztere zwischen der Laserdiode (11) und dem Bildsensor (20) angeordnet ist, wobei jedes Bild für eine Lichtwelle (24) repräsentativ ist, die von der Probe unter der Wirkung der Beleuchtung übertragen wird;

wobei das Verfahren **dadurch gekennzeichnet ist, dass** die Stärke ($i$) des Speisestroms der Laserdiode kleiner oder gleich einer sogenannten kritischen Stromstärke ($i_c$) ist, wobei die kritische Stromstärke vor dem Schritt a) gemäß den folgenden vorausgehenden Schritten bestimmt wird:

i) Anordnung der Laserdiode (11) derart, dass sich die einfallende Lichtwelle (12), die sie emittiert, bis zum Bildsensor (20) ausbreitet;
ii) Speisung der Laserdiode (11) mit einem sogenannten Anfangsspeisestrom, dessen Stromstärke größer oder gleich der Schwellenstromstärke ($i_s$) ist, und Erfassung eines Bildes, Anfangsbild genannt, durch den Bildsensor, wobei das Anfangsbild quer verlaufende Interferenzstreifen aufweist;
iii) Änderung der Stärke des Speisestroms und Erfassung eines Bildes durch den Bildsensor (20), wobei dieser Schritt bis zur Erfassung eines Bildes wiederholt wird, das quer verlaufende Interferenzstreifen aufweist, die gegenüber dem Anfangsbild gedämpft sind, wobei die Stärke des Speisestroms dann der kritischen Stromstärke ($i_c$) entspricht.

2. Verfahren zur Beobachtung einer Probe (10) nach Anspruch 1, wobei die kritische Stromstärke ($i_c$) kleiner als die Schwellenstromstärke ($i_s$) ist.

3. Verfahren zur Beobachtung einer Probe (10) nach Anspruch 2, wobei die kritische Stromstärke zwischen dem 0,7-Fachen der Schwellenstromstärke ($i_s$) und der Schwellenstromstärke ($i_s$) oder zwischen dem 0,8-Fachen der Schwellenstromstärke ($i_s$) und der Schwellenstromstärke ($i_s$) liegt.

4. Verfahren zur Beobachtung einer Probe nach einem der vorhergehenden Ansprüche, wobei im Anfangsbild zwei benachbarte quer verlaufende Interferenzstreifen durch einen Kontrastindikator (*ind*) charakterisiert werden, der für einen Kontrast zwischen den Interferenzstreifen repräsentativ ist, wobei die kritische Stromstärke einer Verkleinerung des Kontrastindikators um einen Faktor entspricht, der größer als 25 % ist.

5. Verfahren zur Beobachtung einer Probe (10) nach einem der vorhergehenden Ansprüche, wobei in den vorausgehenden Schritten i) bis iii) eine Referenzprobe, die für die beobachtete Probe repräsentativ ist, zwischen dem Bildsensor (20) und der Laserdiode (11) angeordnet wird.

6. Verfahren zur Beobachtung einer Probe (10) nach einem der Ansprüche 1 bis 4, wobei in den vorausgehenden Schritten i) bis iii) keine Probe zwischen dem Bildsensor (20) und der Laserdiode (11) angeordnet wird.

7. Verfahren zur Beobachtung einer Probe (10) nach einem der vorhergehenden Ansprüche, wobei die Probe (10) ein Beugungselement (13) aufweist, das geeignet ist, unter der Wirkung der Beleuchtung durch die Lichtwelle (12) eine Beugungswelle (23) zu bilden, derart, dass der Bildsensor einer Welle, Expositionswelle (24) genannt, ausgesetzt ist, welche die durch die Probe übertragene einfallende Lichtwelle (22) sowie die Beugungswelle (23) umfasst.

8. Verfahren zur Beobachtung einer Probe (10) nach Anspruch 1, wobei in Schritt b) die Stärke des Speisestroms ($i$) zwischen dem 0,5-Fachen der Schwellenstromstärke und der Schwellenstromstärke ($i_s$) oder zwischen dem 0,7-Fachen der Schwellenstromstärke und der Schwellenstromstärke liegt.

9. Verfahren zur Beobachtung einer Probe (10) nach Anspruch 1, wobei in Schritt b) die Stärke des Speisestroms ($i$) zwischen dem 0,5-Fachen der Schwellenstromstärke ($i_s$) und dem 0,9-Fachen der Schwellenstromstärke oder zwischen dem 0,7-Fachen der Schwellenstromstärke und dem 0,9-Fachen der Schwellenstromstärke liegt.

10. Verfahren zur Beobachtung einer Probe (10) nach einem der vorhergehenden Ansprüche, wobei sich zwischen der Probe und dem Bildsensor (20) keine Vergrößerungsoptik erstreckt.

**Claims**

1. Method for observing a sample (10), including the following steps:

a) illuminating said sample using a laser diode (11) that is able to emit an incident light wave (12) propagating toward the sample, said laser diode being supplied with a supply current, such that a laser effect is obtained when an intensity of said supply current ($i$) exceeds what is termed a threshold intensity ($i_s$);

b) acquiring, using an image sensor (20), an image (25) of the sample, the latter being positioned between the laser diode (11) and the image sensor (20), each image being representative of a light wave (24) transmitted by the sample under the effect of said illumination;

the method being **characterized in that** the intensity ($i$) of the supply current of said laser diode is less than or equal to what is termed a critical intensity ($i_c$), said critical intensity being determined, prior to step a), according to the following preliminary steps:

i) positioning the laser diode (11) such that the incident light wave (12) that it emits propagates as far as the image sensor (20);

ii) supplying the laser diode (11) with what is termed an initial supply current whose intensity is greater than or equal to said threshold intensity ($i_s$), and acquiring an image, termed initial image, using said image sensor, said initial image having transverse interference fringes;

iii) modifying the intensity of the supply current and acquiring an image using the image sensor (20), this step being repeated until an image is acquired that has transverse interference fringes that are attenuated in comparison with the initial image, the intensity of the supply current then corresponding to the critical intensity ($i_c$).

2.  Method for observing a sample (10) according to Claim 1, wherein said critical intensity ($i_c$) is less than said threshold intensity ($i_s$).

3.  Method for observing a sample (10) according to Claim 2, wherein said critical intensity is between 0.7 times the threshold intensity ($i_s$) and the threshold intensity ($i_s$), or between 0.8 times the threshold intensity ($i_s$) and the threshold intensity ($i_s$).

4.  Method for observing a sample according to any one of the preceding claims, wherein, on the initial image, two adjacent transverse interference fringes are **characterized by** a contrast indicator (*ind*) representative of a contrast between said interference fringes, the critical intensity corresponding to a reduction in said contrast indicator of a factor greater than 25%.

5.  Method for observing a sample (10) according to any one of the preceding claims, wherein, in preliminary steps i) to iii), a reference sample, representative of said observed sample, is positioned between the image sensor (20) and the laser diode (11).

6.  Method for observing a sample (10) according to any one of Claims 1 to 4, wherein, in preliminary steps i) to iii), no sample is positioned between the image sensor (20) and the laser diode (11).

7.  Method for observing a sample (10) according to any one of the preceding claims, wherein the sample (10) includes a diffractive element (13), able to form a diffraction wave (23) under the effect of the illumination by said light wave (12), such that the image sensor is exposed to a wave, termed exposure wave (24), including the incident light wave transmitted (22) by the sample, and also said diffraction wave (23).

8.  Method for observing a sample (10) according to Claim 1, wherein, in step b), the intensity of the supply current ($i$) is between 0.5 times the threshold intensity and the threshold intensity ($i_s$), or between 0.7 times the threshold intensity and the threshold intensity.

9.  Method for observing a sample (10) according to Claim 1, wherein, in step b), the intensity of the supply current ($i$) is between 0.5 times the threshold intensity ($i_s$) and 0.9 times the threshold intensity, or between 0.7 times the threshold intensity and 0.9 times the threshold intensity.

10.  Method for observing a sample (10) according to any one of the preceding claims, wherein no magnifying optics extend between the sample and the image sensor (20).

**Fig. 1**

**Fig. 2A**

**Fig. 2B**

**Fig. 2C**

**Fig. 3A**

25

**Fig. 3B**

**Fig. 3C**

**Fig. 3D**

**Fig. 3E**

**Fig. 3F**

**Fig. 4A**

**Fig. 4B**

**Fig. 5A**

**Fig. 5B**

**Fig. 5C**

Fig. 6A

Fig. 6B

Fig. 6C

Fig. 6D

Fig. 6E

Fig. 6F

Fig. 7A

Fig. 7B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- WO 2015011096 A1

**Littérature non-brevet citée dans la description**

- **GARCIA-SUCERQUIA J.** Digital in-line holographic microscopy. *Applied Optics,* 10 Février 2006, vol. 45 (5
- **RYLE et al.** Digital in-line holography of biological specimens. *Proc. Of SPIE,* 2006, vol. 6311